# EUROPÄISCHE PATENTSCHRIFT

(11) **EP 2 220 471 B1**
(45) Veröffentlichungstag und Bekanntmachung des Hinweises auf die Patenterteilung: **17.10.2012**
(21) Anmeldenummer: 08855733.5
(22) Anmeldetag: 28.10.2008
(51) Int. Cl.: G01J 9/02

(54) **HOCHAUFLÖSENDE PHASENMESSUNG AN EINEM OPTISCHEN SIGNAL**
HIGH-RESOLUTION PHASE MEASUREMENT ON AN OPTICAL SIGNAL
MESURE DE PHASE À HAUTE RÉSOLUTION SUR UN SIGNAL OPTIQUE

(30) Priorität: 30.11.2007 DE 102007058038
(43) Veröffentlichungstag der Anmeldung: 25.08.2010
(73) Patentinhaber: Deutsche Telekom AG, 53113 Bonn (DE)
(72) Erfinder: SCHNEIDER, Thomas, 14552 Michendorf OT Wilhelmshorst (DE)
(74) Vertreter: Braun-Dullaeus, Karl-Ulrich
(86) Internationale Anmeldenummer: PCT/DE2008/001775
(87) Internationale Veröffentlichungsnummer: WO 2009/067974

(56) Entgegenhaltungen:
- WO-A1-2007/132030
- DE-A1-102005 040 968
- VILLAFRANCA A ET AL: "Time-Resolved Chirp Measurements Using Complex Spectrum Analysis Based on Stimulated Brillouin Scattering" OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24. Februar 2008 (2008-02-24), Seiten 1-3, XP031391786 ISBN: 978-1-55752-856-8
- VILLAFRANCA A. ET AL.: ""Novel Phase Spectrum Measurement Method Based on Stimulated Brillouin Scattering,"" COHERENT OPTICAL TECHNOLOGIES AND APPLICATIONS, 13. Juli 2008 (2008-07-13), Seite CMC5, XP002524875 Optical Society of America
- KWANG-YONG SONG ET AL: "SBS slow light in optical fibers with 25-GHz-bandwidth" OPTICAL FIBER COMMUNICATION CONFERENCE NATIONAL FIBER OPTIC ENGINEERS CONFERENCE, OFCNFOEC 2007 25-29 MARCH 2007 ANAHEIM, CA, USA, März 2007 (2007-03), Seiten 34-36, XP002524876 Optical Fiber Communication Conference National Fiber Optic Engineers Conference, OFCNFOEC 2007. Technical Digest IEEE Piscataway, NJ, USA ISBN: 1-55752-831-4
- SCHNEIDER T ET AL: "Theoretical and experimental investigation of Brillouin scattering for the generation of millimeter waves" Journal of the Optical Society of America B (Optical Physics) Opt. Soc. America USA, Bd. 23, Nr. 6, Juni 2006 (2006-06), Seiten 1012-1019, XP002524877 ISSN: 0740-3224 in der Anmeldung erwähnt

## Beschreibung

Die Erfindung betrifft ein Verfahren zur Bestimmung des Phasenunterschiedes zwischen zwei Frequenzbändern im Spektrum einer elektromagnetischen Probestrahlung. Die Erfindung betrifft zudem ein System zur Umsetzung des Verfahrens.

Eine genaue Bestimmung der spektralen Verteilung der Energie eines Signals ist für die Wissenschaft und die Technik von großer Bedeutung. Beispielsweise werden in der optischen Nachrichtentechnik Informationen auf unterschiedlichen WellenlängenKanälen übertragen, wobei die genaue Kenntnis des Spektrums eines einzelnen Kanals für die Funktion des gesamten Systems besonders wichtig ist. Auch für andere Anwendungen ist die Kenntnis des Spektrums notwendig. So kann aufgrund der Änderung des Spektrums eines optischen Signals bei der Ausbreitung in einem Medium auf die Eigenschaften des Mediums geschlossen werden.

Zur vollständigen Kenntnis über ein Spektrum gehört jedoch neben der Amplitudenverteilung auch die Information über die Verteilung der Phasenlagen der einzelnen spektralen Anteile: Erst mit beiden Informationen zusammen lassen sich beispielsweise Rückschlüsse auf das dem Spektrum zugrunde liegende Zeitsignal durch Fourier-Transformationen ziehen. Bislang bekannte Verfahren sind jedoch lediglich in der Lage, die Amplitudenverteilung in einem optischen Signal zu bestimmen. Die Messung der Phasenverteilung ist nicht möglich.

Zur Messung der Amplitudenverteilung in einem optischen Signal sind eine Reihe unterschiedlicher Methoden, wie Interferometer und Gitterspektrometer, bekannt. In der Nachrichtentechnik wird die Amplitudenverteilung von Wellenlängenkanälen mit Hilfe optischer Spektrumanalysatoren ("OSA") gemessen. Insbesondere aus der DE 10 2005 040 968 A1 ist ein Verfahren bekannt, bei dem die geringe Bandbreite der stimulierten Brillouin-Streuung (SBS) zur Messung der Amplitudenverteilung genutzt wird. Bei diesem Verfahren erzeugt ein Pumplaser einen schmalbandigen Gewinn in einer Faser über den nichtlinearen Effekt der stimulierten Brillouin Streuung. Dieser Gewinn wird gewissermaßen über das zu messende Spektrum "geschoben", wobei die innerhalb des Gewinns verstärkten Anteile in Abhängigkeit von der Verschiebung der zu messenden Amplitudenverteilung im Signal entsprechen.

Bezüglich einer Phasenmessung ist es lediglich möglich, die Phase einer einzelnen monochromatischen Welle mit interferometrischen Methoden zu bestimmen. Optische Netzwerkanalysatoren messen die Phasenänderung einer optischen Welle beim Durchgang durch einen Vierpol auf elektrischem Weg durch Vergleich mit einem elektrischen Vergleichssignal.

Ein weiteres Verfahren zur Analyse optischer Spektren unter Verwendung von SBS und heterodyner Detektion ist aus WO 2007/132030 A1 bekannt.

Die Aufgabe der Erfindung ist es nunmehr, ein Verfahren und ein System zur hochauflösenden Phasenmessung zu schaffen, mit dem es möglich ist, das Phasenspektrum eines modulierten optischen Signals zu vermessen, und das sich mit einfachen Mitteln umsetzen lässt und das bei hoher Genauigkeit robust und zuverlässig ist. Zudem ist es Aufgabe der Erfindung ein System zur Umsetzung des Verfahrens zu schaffen.

Diese Aufgaben werden durch das Verfahren nach Anspruch 1 und das System nach Anspruch 13 gelöst. Vorteilhafte Ausgestaltungen sind in den jeweiligen Unteransprüchen genannt.

Der wesentliche Grundgedanke der Erfindung liegt darin, zunächst zwei Frequenzbänder aus dem Spektrum der Probestrahlung beispielsweise mit dem in der DE 10 2005 040 968 A1 offenbarten Verfahren "auszuschneiden", die Frequenz des einen ausgeschnittenen Teils der des anderen anzupassen und beide Frequenzenbänder nachfolgend zu überlagern. Die Amplitude der Überlagerung wird über die vom Phasenunterschied abhängige Intensität der Strahlung gemessen. Auf diese Weise lässt sich der Phasenunterschied zwischen den beiden Frequenzbändern über die Bestimmung der Intensität ermitteln.

Dabei beruht die Erfindung zunächst ganz generell darauf, dass eine Pumpwelle in einem nichtlinearen Medium, beispielsweise einer Glasfaser, für eine gegenläufige und frequenzverschobene Signalwelle einen (Brillouin) Gewinn erzeugt. In Standard Single Mode Fasern (SSMF) beträgt diese Frequenzverschiebung etwa 11 GHz für eine Pumpwellenlänge von 1550nm. Dabei macht es sich die Erfindung zu Nutze, dass der erzeugte Gewinn zum einen verhältnismäßig hoch ist - er kann mehr als 30dB betragen - und zum anderen eine wesentlich geringere Bandbreite als das zu messende Spektrum hat. In den genannten SSMF beträgt die Bandbreite des Gewinns annähernd 30MHz für Pumpwellenlängen von 1550nm. In "Allwave" oder "Truewave" Fasern ist der Gewinn bei derselben Pumpwellenlänge mit einer Bandbreite von rund 10MHz noch kleiner. Da alles, was in den Bereich der SBS-Bandbreite fällt, um ein Vielfaches verstärkt wird, wirkt die SBS als besonders schmalbandiger aktiver Filter, wobei alles andere durch die natürliche Faserdämpfung in der Amplitude verringert wird. Das Verfahren basiert auf der Grundidee, dass mit SBS ein Teil des Spektrums herausgeschnitten wird. Für diesen Teil wird dann durch Vergleich mit einem anderen Teil desselben Spektrums die Phase bestimmt. Damit beim Vergleich die Frequenzen beider Teile übereinstimmen, werden sie aufeinander abgestimmt. Daraufhin wird der nächste Teil des Spektrums auf dieselbe Art vermessen bis das gesamte Spektrum vermessen ist.

Umgesetzt wird der Erfindungsgedanke insbesondere dadurch, dass die zu analysierende Probestrahlung auf zwei nichtlineare Medien, nachfolgend Lichtleiter, aufgeteilt wird und sich in jedem dieser Zweige in Ausbreitungsrichtung ausbreitet. Zur Erzeugung von SBS wird in jeden der beiden Lichtleiter jeweils eine Pumpstrahlung respektive eine Pumpwelle einer bekannten Frequenz entgegen der Ausbreitungsrichtung der Probestrahlung eingekoppelt. Die SBS in einem der beiden Zweige wird als Referenz genutzt. Nun wird die Frequenz der einen ersten Pumpwelle, die in den einen Zweig, insbesondere in den Referenzzweig eingekoppelt wird, derart gewählt, dass ein schmales erstes Frequenzband der Probestrahlung durch stimulierte Brillouin Streuung (SBS-Gewinn) verstärkt wird. Die Frequenz der zweiten in den anderen Zweig eingekoppelten Pumpwelle wird hingegen derart gewählt, dass ein schmales zweites Frequenzband der Probestrahlung durch SBS verstärkt wird. Die Frequenzen der Pumpwellen und damit der SBS Gewinn Peaks befinden sich dabei in einem Frequenzbereich, in dem das Spektrum der Probenstrahlung erwartet wird. Die Frequenz des ersten Frequenzbands wird durch eine Modulation an die Frequenz des zweiten angepasst und die Intensität der Überlagerung mittels des Detektors gemessen.

Dabei kann eines der beiden Frequenzbänder unter Beobachtung der im Detektor auftreffenden Intensität mit einem Phasenstellglied in der Phase verschoben werden, wobei aus dem Unterschied der Amplitudensignale auf die Phasendifferenz der beiden Frequenzbänder geschlossen werden kann.

In einer anderen Ausführungsform wird das unbekannte Spektrum nicht auf zwei Lichtleiter aufgeteilt, sondern es wird für die Messung nur ein Lichtleiter genutzt. In diesen werden in oben beschriebener Weise sowohl das Referenzsignal als auch der Ausschnitt des unbekannten Spektrums über SBS erzeugt. Beide Bänder werden anschließend mit Faser-Bragg Gittern oder anderen Filtern voneinander getrennt und die Phase wird, wie oben beschrieben, gemessen.

Zur Erhöhung der Geschwindigkeit der Messung kann auf die Änderung der Phase mit dem Phasenstellglied verzichtet werden. Der Ausgangsstrom des Detektors, insbesondere der Photodiode, *l*_{PD} folgt der Gleichung *l*_{PD}=*l*₁*l*₂cos(ΔΦ), wobei *l*₁ und *l*₂ die Intensitäten und ΔΦ den Phasenunterschied der beiden im oberen und unteren Zweig verstärkten Anteile des unbekannten Spektrums darstellt. Die Amplituden- und damit Intensitätsverteilung des unbekannten Spektrums lässt sich über einen Koppler und eine Photodiode bestimmen. Damit sind *l*₁ und *l*₂ bekannt und es lässt sich ΔΦ aus dem gemessenen Strom *l*_{PD} berechnen. Da die Kosinusfunktion aber nicht eindeutig ist, gibt es - außer im Maximum und Minimum - für jeden Ausgangsstrom zwei mögliche Werte für ΔΦ. Für eine eindeutige Bestimmung der Phase muss die Messung daher zwei mal durchgeführt werden, wobei bei der zweiten Messung das sich im unteren Zweig ausbreitende Spektrum mit einem Phasenschieber um einen bekannten kleinen Phasenwinkel verschoben wird. Liegt die zu messende Phase zwischen 0 und π so verringert sich der Ausgangsstrom bei der zweiten Messung. Liegt sie jedoch zwischen π und 2π so erhöht sich der Ausgangsstrom. Während bei der zuerst genannten Methode für jeden einzelnen spektralen Anteil über das Phasenstellglied eine Bestimmung der Phase durchgeführt werden muss, kann hier die Phase in nur zwei Schritten über das gesamte Spektrum gemessen werden. Die Phaseninformation wird dabei mit Hilfe einer Phasenverschiebung zwischen zwei Kopien des Spektrums der Probestrahlung eindeutig bestimmt.

Dieses Verfahren erlaubt es, neben der Amplitudenverteilung gleichzeitig auch die Phasenverteilung in einem optischen Signal zu bestimmen. Dabei kann die Messung für beide Größen mit einer Auflösung im Bereich weniger Femtometer (10⁻¹⁵ m) erfolgen. Aus diesem erfindungsgemäßen Vorgehen ergeben sich eine Reihe von Vorteilen: Zum einen lassen sich mit einer Messung der. Amplituden- und Phasenverteilung Rückschlüsse auf die Zeitfunktion des optischen Signals der Probenstrahlung ziehen. Zudem kann die optische Übertragungsstrecke im Hinblick auf nichtlineare Effekte, die Dispersion des Übertragungsmediums und andere Einflüsse bei der Übertragung untersucht werden. Auch lässt sich über die Amplituden- und Phasenänderung des Spektrums bei der Ausbreitung die Übertragungsfunktion des Kanals bestimmen. Da die SBS im gesamten Transparenzbereich eines Mediums entstehen kann, lässt sich das Verfahren auch in anderen Bereichen - wie z.B. Medizin, Chemie, Materialwissenschaften usw. - einsetzen in denen Spektren untersucht werden.

Dabei ist es vorteilhaft, wenn die Intensität der Pumpstrahlung so bemessen wird, dass sie in Abwesenheit der Probenstrahlung innerhalb der Wellenleiter höchstens in unmerklichem Maß nichtlineare Effekte, wie insbesondere eine Stimulierte Brillouin Streuung erzeugt.

Mit der erfindungsgemäßen Methode lässt sich die Übertragungsfunktion einer beliebig langen, an einem beliebigen Ort verlegten, optischen Übertragungsstrecke bestimmen. Im Gegensatz dazu sind die bekannten optischen Netzwerkanalysatoren lediglich in der Lage, die Übertragungsfunktion eines räumlich eng begrenzten optischen Vierpols zu messen, da Aus- und Eingang relativ nah beieinander liegen müssen. Zudem kann ein das erfindungsgemäße Verfahren umsetzendes System mit Standardkomponenten der optischen Übertragungstechnik aufgebaut werden, was es besonders preiswert, zuverlässig und robust macht.

Da die Phase der durch SBS verstärkten Welle nicht durch die Phase der Pumpwelle beeinflusst wird, können die beiden Pumpwellen des oberen und unteren Zweiges auch von zwei unabhängigen Lasern erzeugt werden. Sind beide in ihrer Frequenz durchstimmbar, so lassen sich optische Spektren beliebiger Breite messen. Besonders einfach ist es hingegen, wenn die Pumpstrahlung von einer gemeinsamen Pumpquelle, insbesondere einem Laser, erzeugt und dann durch einen Strahlteiler auf die beiden Lichtleiter aufgeteilt wird. Vorteilhafterweise erzeugt dann die Pumpstrahlung im ersten Zweig den als Referenzstrahlung dienenden Brillouin-Gewinn, während die Pumpstrahlung im zweiten Zweig in ihrer Frequenz verschoben wird.

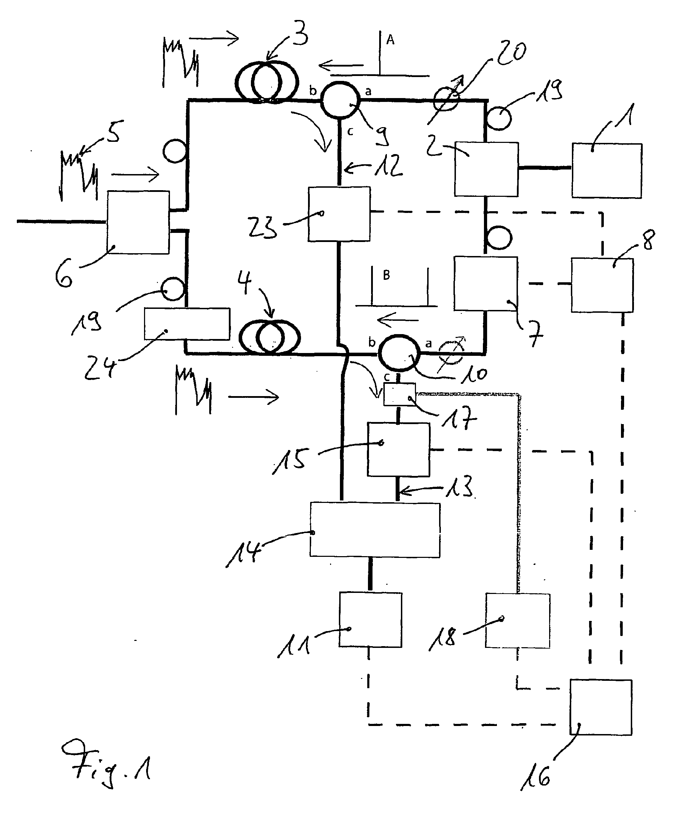

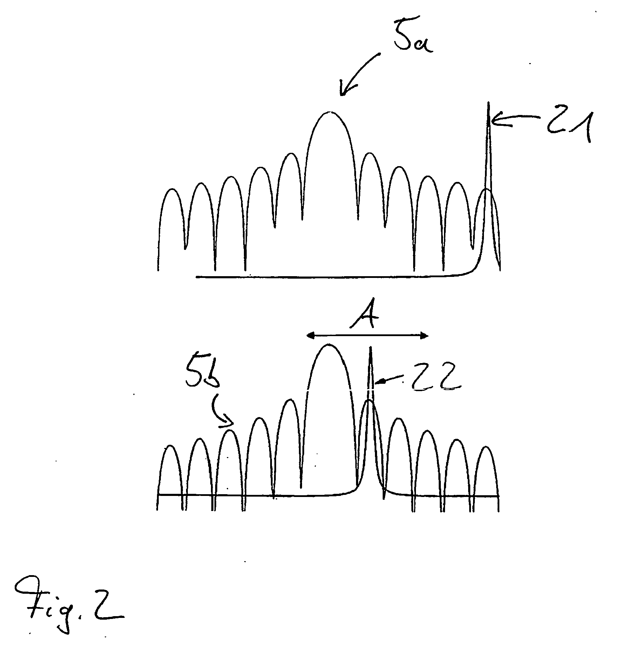

Die Erfindung wird anhand eines Ausführungsbeispieles und anhand der Figuren 1 und 2 näher erklärt. Es zeigen:
- **Figur 1**: den schematischen Aufbau eines erfindungsgemäßen Systems und
- **Figur 2**: die Messung an einem unbekannten Spektrum.

In Figur 1 ist der grundsätzliche Aufbau des erfindungsgemäßen Systems, das auf der Grundlage des nichtlineare Effektes der stimulierten Brillouin Streuung (SBS) beruht, gezeigt. Die zur Phasenmessung benötigte Pumpwelle wird durch einen Laser 1 erzeugt, der eine DFB-Laserdiode, ein durchstimmbarer Laser oder jede andere Form von Laser sein kann. Besonders vorteilhaft für den Aufbau ist jedoch ein durchstimmbarer Laser mit einer geringen Linienbreite. Die Leistung der Pumpwelle wird durch einen 3dB-Koppler 2 in zwei Teile aufgespalten und breitet sich in nichtlinearen Medien des oberen und unteren Zweiges aus. Von der anderen Seite wird das unbekannte Spektrum 5 ebenfalls über einen 3dB Koppler 6 auf die beiden Zweige aufgeteilt, so dass sich das Spektrum und die jeweilige Pumpwelle in beiden nichtlinearen Medien in entgegengesetzten Richtungen zueinander ausbreiten. Als nichtlineare Medien werden beispielsweise SSMF Fasern 3 und 4 eingesetzt, wobei Fasern mit einem besonders hohen Brillouin Koeffizienten, wie beispielsweise Wismut-, As₂Se₃ - und Erbium dotierte Tellurfasern, den Vorteil einer geringen Wechselwirkungslänge bieten, so dass der Aufbau klein gewählt werden kann.

Spezialfasern wie beispielsweise Truewave und Allwave Fasern haben eine besonders geringe Bandbreite der SBS, so dass die Auflösung des Systems größer ist.

Im oberen Zweig erzeugt die Pumpwelle A des Lasers 1 einen Brillouin Gewinn, der einen schmalbandigen Teil des Probespektrums verstärkt. Die Wellenlänge des Pumplasers 1 wird dabei so eingestellt, dass die Pumpwelle nur für den höchsten Frequenzbereich des Spektrums einen Gewinn erzeugt (siehe Figur 2 oben). Im unteren Zweig passiert die Pumpwelle einen Modulator 7, beispielsweise einen Mach Zehnder Modulator, der die Pumpwelle mit einem von einem Sinusgenerator 8 erzeugten Sinussignal moduliert. Der Modulator wird so eingestellt, dass der Träger unterdrückt wird und im Ausgangsspektrum B nur zwei Seitenbänder vorhanden sind. Durch eine Erhöhung der Frequenz des Sinusgenerators 8 verschieben sich beide Seitenbänder, wobei das untere zu niedrigeren Frequenzen und das obere zu höheren Frequenzen wandert. Das untere Seitenband dient als Pumpwelle im nichtlinearen Medium SSMF 4 und erzeugt dort einen SBS-Gewinn. Mit einer Änderung der Generatorfrequenz lässt sich dementsprechend der vom unteren Seitenband erzeugte SBS-Gewinn durch das unbekannte Spektrum schieben (siehe Abb.2 unten).

Die Referenz-Pumpwelle wird über den Zirkulator 9 in die Faser 3 eingekoppelt. Im unteren Zweig werden die beiden Seitenbänder über den Zirkulator 10 in die Faser 4 eingekoppelt. Die Zirkulatoren 9 und 10 haben eine geringe Dämpfung für die Wege a → b und b → c und eine hohe Dämpfung für die Wege b → a und c → b. Die gering gedämpften Wege sind in der Figur durch Pfeile angedeutet. Über die Wege b → c werden die durch die Brillouin-Gewinne verstärkten Frequenzanteile jeweils in Ausleitwege 12 und 13 ausgekoppelt, die beide im 3dB Koppler 14 vereint werden.

Zunächst wird die Wirkungsweise des oberen Zweigs beschrieben: Die Pumpwelle verstärkt im nichtlinearen Medium 3 den höchsten Frequenzbereich des unbekannten Spektrums 5a. Die Auswahl dieses Bereichs lässt sich beispielsweise über einen Schwellwert bestimmen. Die Wellenlänge des Pumplasers 1 wird ohne Modulation so lange verändert, bis an der Photodiode 11 ein Signal anliegt das über einem vorher definierten Schwellwert liegt. Die Verstärkung erfolgt über die SBS, sie ist daher sehr schmalbandig und kann mehr als 30dB betragen. Die restlichen Frequenzanteile des unbekannten Spektrums werden durch die natürliche Dämpfung in der Faser verringert. Über den Weg b → c des Zirkulators 9 wird demnach nur der Teil des unbekannten Spektrums ausgekoppelt der innerhalb der schmalen Bandbreite der Brillouinstreuung liegt. Mit dem Modulator 23 wird der verstärkte Frequenzanteil moduliert. Die jeweilige Frequenz der Modulation wird durch den Generator 8 bestimmt. Vorteilhafterweise wird der Modulator 23 so eingestellt, dass der Träger unterdrückt wird. Im Ausgangsspektrum befinden sich demnach zwei Seitenbänder. Da bei einer Amplitudenmodulation die Phase erhalten bleibt, haben beide Seitenbänder dieselbe Phase wie der ausgekoppelte Teil des unbekannten Spektrums. Die beiden Seitenbänder gelangen über den 3 dB Koppler 14 auf die Photodiode 11.

Im unteren Zweig wird ebenfalls nur ein schmalbandiger Teil des unbekannten Frequenzspektrums durch SBS verstärkt. Der dafür nötige Gewinn wird durch das untere Seitenband B im nichtlinearen Medium 4 erzeugt (siehe auch Figur 2 unten). Dieser Anteil ist wiederum schmalbandig, während alle anderen Frequenzanteile des unbekannten Spektrums in dem Medium 4 gedämpft werden. Der verstärkte Anteil wird über den Weg b → c des Zirkulators 10 ausgekoppelt und gelangt auf ein Phasenstellglied 15. Als Phasenstellglied lässt sich alles einsetzen, was die Phase einer optischen Welle wenigstens im Bereich zwischen 0 und 2 π zu ändern vermag. Besonders vorteilhaft ist eine Änderung der Phase über den elektrooptischen Effekt, wie er in Mach Zehnder Modulatoren durchgeführt wird. Am einfachsten und kostengünstigsten lässt sich daher ein Mach Zehnder Modulator mit zwei freien Eingängen als Phasenstellglied einsetzen. Danach wird das Signal des unteren Zweigs im 3 dB Koppler 14 mit den beiden Seitenbändern des oberen Zweigs kombiniert und alles zusammen gelangt auf die Photodiode 11.

Zumindest im Zentrum der Verstärkung ändert der SBS Verstärkungsprozess die Phasenlage des verstärkten Signals nicht (T. Schneider, M. Junker, K.U. Lauterbach, J. Opt. Soc. Am. B 23, (6), 1012-1019 (2006)). An den beiden Flanken des SBS-Gewinns kommt es hingegen zu einer Phasenänderung. Da der Gewinn aber exponentiell in die Verstärkung des Signals eingeht ist die daraus resultierende Verfälschung der Phasenlage gering. Bei einer Amplitudenmodulation haben die Seitenbänder dieselbe Phase wie der Träger, daher bleibt die Phaseninformation des im oberen Zweig ausgekoppelten Anteils bei der Modulation mit dem Modulator 23 erhalten.

Durch die Modulation mit dem Modulator 23 wird der im oberen Zweig ausgekoppelte Anteil in der Frequenz nach unten und nach oben verschoben. Da für die Ansteuerung der Modulatoren 7 und 23 derselbe Generator 8 benutzt wird, entspricht die optische Frequenz des unteren Seitenbandes immer der optischen Frequenz des im unteren Zweig ausgekoppelten Anteils. Durch die Überlagerung der beiden gleichfrequenten Anteile in der Photodiode entsteht ein Gleichstrom dessen Größe von der relativen Phasenbeziehung der beiden kombinierten Signale abhängt. Dabei ergibt sich das Maximum des Ausgangsstroms, wenn beide Signale dieselbe Phase aufweisen. Ein Minimum tritt hingegen auf, wenn beide Signale eine Phasenverschiebung von π haben.

Vorteilhafterweise dient der oberste Frequenzbereich des unbekannten Spektrums 5a als Referenz, wobei das Referenzsignal 21 (Figur 2) durch die beschriebene Verstärkung durch SBS im oberen Zweig erzeugt wird. Relativ zu dieser Referenz wird die Phase des Signal-Spektrums gemessen. Dies geschieht durch eine Phasenänderung des im unteren Zweig verstärkten Anteils mit dem Phasenstellglied 15. Damit wird die Phase so lange geändert, bis der Ausgangsstrom der Photodiode 11 ein Maximum oder ein Minimum aufweist. Die auf diese Weise im Phasenstellglied 15 eingestellte Phase ist dann die Phase des jeweils verstärkten Anteils des unbekannten Spektrums 5b relativ zur Phase des Referenzsignals 21 des obersten Teils des Spektrums 5a. Durch eine Änderung der Frequenz des Generators 8 wird der durch das untere Seitenband in SSMF 4 erzeugte Gewinn 22 durch das unbekannte Spektrum 5b "geschoben" (Pfeil A). Auf diese Weise wird das gesamte unbekannte Spektrum 5b gescannt und für jeden Anteil wird auf die oben beschriebene Weise die Phasenlage relativ zum oberen Teil des Spektrums ermittelt. Die Steuerung der Generatorfrequenz, der Phasenänderung und die Messwertaufnahme werden über einen Computer 16 durchgeführt.

Vorteilhafterweise wird die Phasenlage relativ zum Träger, der sich meist in der Mitte des Spektrums befindet, angegeben. Dies wird insbesondere durch eine Nachbehandlung der gemessenen Werte mit Hilfe eines Computers 16 erreicht. Dieser ermittelt die Mitte der gemessenen Werte und rechnet alle Werte bezogen auf diesen Mittelwert um. Auf dieselbe Weise lässt sich auch jeder andere Referenzpunkt definieren.

Eine andere Möglichkeit der Messung der Phase besteht darin, im Gerät selbst eine optische Welle bei einer bestimmten Frequenz zu erzeugen deren Phase bekannt ist. Die Frequenz muss dabei der Frequenz des zu messenden Anteils entsprechen. Die im Gerät erzeugte Welle wird dann an Stelle des oberen Zweigs in den 3dB Koppler 14 eingekoppelt. Wenn sich aus dem Signal der Träger extrahieren lässt, so ist es auch möglich, diesen in oben beschriebener Weise als Referenz zu benutzen.

Für eine genaue Messung der Phase müssen die Wege der beiden Anteile des Spektrums im System gleich sein. Ein derartiger Aufbau ist nur mit großem Aufwand zu realisieren. Vorteilhaft ist hingegen eine Kalibrierung des Messaufbaus. Dazu werden vor einer Messung die Modulatoren 7 und 23 zunächst nicht moduliert, so dass die ursprüngliche Pumpwelle sowohl in den oberen als auch in den unteren Zweig eingespeist wird. In diesem Fall werden in beiden Zweigen dieselben Anteile des unbekannten Spektrums durch SBS verstärkt und am 3 dB Koppler 14 überlagert. Im Anschluss daran wird die Phase des im unteren Zweig verstärkten Signals über das Phasenstellglied 15 so lange verändert, bis sich im Ausgangsstrom der Photodiode 11 ein Maximum oder Minimum ergibt. Ist dies geschehen, so ist der Aufbau kalibriert. Alle folgenden Messungen gehen dann entweder von diesem Punkt aus, oder es wird die messtechnisch ermittelte Phase mit diesem Wert korrigiert.

Schaltet man an den Ausgang c des Zirkulators 10 über einen Koppler 17 eine zusätzliche Photodiode 18, so lässt sich gleichzeitig mit dem Phasen- auch das Amplitudenspektrum mit einer hohen Auflösung messen. Das Prinzip der Messung des Amplitudenspektrums ist dasselbe wie bereits in DE 10 2005 040 968 A1 beschrieben. Als Koppler lässt sich dabei jede Form eines optischen Kopplers, insbesondere auch ein 3dB Koppler, nutzen.

Sind die beiden nichtlinearen Medien SSMF 3 und SSMF 4 lang, so kann sich die Phasenlage des zu messenden Spektrums durch Dispersion bei der Ausbreitung in den beiden nichtlinearen Medien ändern. Dieser Einfluss ist messbar und kann bei gleichzeitiger Kenntnis des Amplitudenspektrums rechnerisch korrigiert werden.

Anstatt der genannten Photodioden lassen sich auch alle anderen Detektoren die ein optisches in ein elektrisches Signal verwandeln, einsetzen. Da die Messung der Phase und der Frequenz auf der Basis der SBS erfolgt, ist die Auflösung des Instruments von der Bandbreite der SBS abhängig. In SSMF beträgt diese Bandbreite bei einer Pumpwellenlänge von 1550nm etwa 30MHz. Durch den Einsatz anderer nichtlinearer Medien wie z.B. Truewave oder Allwave Fasern lässt sich diese Bandbreite verringern und damit die Auflösung des Instruments steigern. Ein anderer Weg besteht in der Erhitzung des nichtlinearen Mediums. In diesem Fall sinkt die Bandbreite der SBS ebenfalls. Der durch SBS in optischen Medien erzeugte Gewinn ist von der Polarisation der Wellen abhängig, daher ist eine Kontrolle der Polarisation aller Anteile durch Polarisatoren 19 vorteilhaft. Eine andere Möglichkeit besteht darin, die Polarisation der Pumpwelle durch Depolarisatoren aufzuheben.

Zur Erhöhung des Dynamikbereichs des Systems sollte die Amplitude der beiden im oberen und unteren Zweig erzeugten spektralen Anteile keine großen Unterschiede aufweisen. Dies kann man durch eine unterschiedliche Pumpleistung in beiden Zweigen erreichen. Die Einstellung der Pumpleistungen kann über die beiden optischen Dämpfungsglieder 20 geschehen. Alternativ dazu ließe sich die Aufteilung der Pumpleistung in beide Zweigen über einen variablen Koppler 2 steuern. Besonders günstig ist es, sowohl die Steuerung der Pumpleistungen, als auch die Steuerung der Polarisation automatisch über den Rechner 16 durchzuführen. Die in Figur 1 gezeigten unterbrochenen Linien deuten die dafür notwendigen elektrischen Verbindungen an.

## Patentansprüche

1. Verfahren zur Bestimmung des Phasenunterschiedes zwischen zwei Frequenzbändern im Frequenzspektrum einer elektromagnetischen Probestrahlung (5) aufweisend folgende Schritte:
- die Probestrahlung (5) wird in mindestens einen Lichtleiter (3,4) eingekoppelt, in dem oder denen sie sich jeweils in Ausbreitungsrichtung ausbreitet,
- in den oder die Lichtleiter (3,4) wird jeweils eine Pumpstrahlung (A,B) einer bekannten Frequenz entgegen der Ausbreitungsrichtung der Probestrahlung (5) eingekoppelt,
- die Frequenz der einen ersten Pumpstrahlung (A) wird derart gewählt, dass ein schmales erstes Frequenzband der Probestrahlung (5) durch stimulierte Brillouin Streuung verstärkt (SBS-Gewinn) wird,
- die Frequenz der anderen zweiten Pumpstrahlung (B) wird derart gewählt, dass ein schmales zweites Frequenzband der Probestrahlung (5) durch SBS verstärkt wird,
- die Frequenz des ersten Frequenzbandes wird durch eine Amplitudenmodulation so verändert, dass sie mit der Frequenz des zweiten Frequenzbands übereinstimmt,
- die beiden verstärkten Frequenzbänder werden in einem gemeinsamen Strahl vereint, wobei die Amplitude der entstehenden Überlagerung in einem Detektor (11) registriert und daraus die relative Phasenlage zwischen den Frequenzbändern bestimmt wird.

2. Verfahren nach Anspruch 1,
**dadurch gekennzeichnet,**
**dass** die Probestrahlung (5) in zwei Lichtleiter (3,4) eingekoppelt wird.

3. Verfahren nach Anspruch 1 oder 2,
**dadurch gekennzeichnet,**
**dass** aus dem Ausgangssignal des Detektors (11), insbesondere des optisch-elektrischen Wandlers, die Phaseninformation direkt bestimmt wird.

4. Verfahren nach Anspruch 3,
**dadurch gekennzeichnet,**
**dass** die Phaseninformation mit Hilfe einer Phasenverschiebung zwischen zwei Kopien des Spektrums der Probestrahlung eindeutig bestimmt wird.

5. Verfahren nach Anspruch 1,
**dadurch gekennzeichnet,**
**dass** eines der beiden Frequenzbänder mittels eines Phasenschiebers (15) unter Registrierung des Amplitudensignals phasenverschoben wird, wobei aus der Änderung des Amplitudensignals auf die Phasendifferenz der beiden Frequenzbänder geschlossen wird.

6. Verfahren nach einem der vorherigen Ansprüche,
**dadurch gekennzeichnet,**
**dass** die in den oder die Lichtleiter (3,4) einzukoppelnde Pumpstrahlung (A,B) von einer gemeinsamen Pumpquelle, insbesondere einem Laser (1), erzeugt wird, wobei die Pumpstrahlung (A,B) durch einen Strahlteiler (2) auf die beiden Lichtleiter (3,4) aufgeteilt wird, wobei der im ersten Lichtleiter (3) erzeugte Gewinn Peak als Referenz dient

7. Verfahren nach einem der vorherigen Ansprüche,
**dadurch gekennzeichnet,**
**dass** die Frequenz der jeweiligen Pumpstrahlung (A,B) derart abgestimmt wird, dass der Stokes Peak der SBS im Frequenzspektrum der Probenstrahlung (5) liegt.

8. Verfahren nach Anspruch 7,
**dadurch gekennzeichnet,**
**dass** die Pumpstrahlung (A,B) im zweiten der beiden Lichtleiter (4) in der Frequenz über das Spektrum der Probenstrahlung (5) hinweg verschoben wird.

9. Verfahren nach Anspruch 1,
**dadurch gekennzeichnet,**
**dass** die Phasendifferenz der beiden Frequenzbänder im Bezug auf ein Minimum oder Maximum des Amplitudensignals bestimmt wird.

10. Verfahren nach Anspruch 1,
**dadurch gekennzeichnet,**
**dass** die Probestrahlung (5) im Frequenzbereich des sichtbaren Lichtes oder nahe dem sichtbaren Licht liegt.

11. Verfahren nach Anspruch 1,
**dadurch gekennzeichnet,**
**dass** die Intensität der Pumpstrahlung (A,B) so bemessen wird, dass sie in Abwesenheit der Probenstrahlung (5) innerhalb der Wellenleiter (3,4) höchstens in unmerklichem Maß nichtlineare Effekte, wie insbesondere eine Stimulierte Brillouin Streuung ("SBS"), erzeugt.

12. Verfahren nach einem der vorherigen Ansprüche,
**dadurch gekennzeichnet,**
**dass** ein Teil des zweiten verstärkten Frequenzbandes über einen Koppler (17) ausgekoppelt und mittels eines weiteren Detektors (18) aufgenommen wird, so dass mit dem Phasenspektrum gleichzeitig auch das Amplitudenspektrum messbar ist

13. System zur Umsetzung des Verfahrens nach einem der vorherigen Ansprüche,
**gekennzeichnet durch**
zwei Probezweige umfassend jeweils einen Wellenleiter (3,4), in denen sich jeweils Probestrahlung (5) derselben Quelle in Vorwärtsrichtung ausbreitet,
Koppelmittel (2) zur Einkopplung von Pumpstrahlung (A,B) in jeden der Probezweige entgegen der sich darin ausbreitenden Probenstrahlung (5), einen Frequenzschieber (7) zur Beeinflussung der Frequenz der sich in einem Probezweig (4) ausbreitenden Pumpstrahlung (B),
einen Frequenzschieber (23) zur Beeinflussung der Frequenz eines der ausgekoppelten Frequenzanteile,
jeweils Koppelmittel (9,10) zum Auskoppeln der sich in jedem Probezweig in Vorwärtsrichtung ausbreitenden Strahlung,
ein Vereinigungsmittel (14) zum Überlagern der beiden ausgekoppelten Strahlungen und
einen Detektor (11) zur Messung der Intensität der überlagerten Strahtung und
einen Computer, programmiert zur Durch-führung des Verfahrens nach einem der vorigen Ansprüche.

14. System nach Anspruch 13,
**gekennzeichnet durch**
ein Phasenstellglied (15) zur Beeinflussung der Phasenlage der sich in einem Probezweig ausbreitenden Strahlung.

15. System nach Anspruch 14,
**gekennzeichnet durch**
eine Pumpquelle, insbesondere eine durchstimmbare Laserquelle (1), zur Erzeugung der in beide Probezweige (3,4) einzukoppelnden Pumpstrahlung.

16. System nach Anspruch 13,
**gekennzeichnet durch**
einen Computer (16) zur automatischen Steuerung der Frequenzschieber (7,23) und des Phasenstellglieds (15), sowie zur Auslese des Detektorsignals.

## Claims

1. Method for the determination of the phase difference between two frequency bands in the frequency spectrum of an electromagnetic test beam (5), comprising the following steps:
- the test beam (5) is coupled into at least one optical fiber (3,4), in which it spreads respectively in the spreading direction,
- a pump beam (A,B) of known frequency is respectively coupled into the optical fiber or fibers (3,4) in opposite direction to the spreading direction of the test beam (5),
- the frequency of the pump beam (A) is selected in a manner, so that a narrow first frequency band of the test beam (5) is amplified by the stimulated Brillouin scattering (SBS-benefit),
- the frequency of the other second pump beam (B) is selected in a manner, so that the a narrow second frequency band of the test beam (5) is amplified by SBS,
- the frequency of the first frequency band is modified by amplitude modulation in a manner, so that it conforms to the frequency of the second frequency band,
- both amplified frequency bands are unified into one common beam, wherein the amplitude of the resulting overlay is registered by a detector (11) and from this the relative phasing between frequency bands is determined.

2. Method according to claim 1,
**characterized in**
**that** the test beam (5) is coupled into two optical fibers (3,4).

3. Method according to claim 1 or 2,
**characterized in**
**that** the phase information is directly determined from the output signal of the detector (11), in particular of the optical-electrical converter.

4. Method according to claim 3,
**characterized in**
**that** the phase information is determined unambiguously by means of phase shift between two copies of the spectrum of the test beam.

5. Method according to claim 1,
**characterized in**
**that** one of the both frequency bands is phase shifted by means of a phase shifter (15) under registration of the amplitude signal, wherein the phase difference of both phase bands can be gathered from the modification of the amplitude signal.

6. Method according to one of the preceding claims,
**characterized in**
**that** the test beam, which is coupled into the optical fiber or fibers (3,4), is created by a common pump source, in particular a laser (1), wherein the pump beam (A,B) is splitted by a beam splitter (2) onto the both optical fibers (3,4), wherein the benefit peak created in the first optical fiber (3) serves as a reference.

7. Method according to one of the preceding claims,
**characterized in**
**that** the frequency of the respective pump beam (A,B) is tuned in a way, so that the Stokes Peak of the SBS is arranged in the frequency spectrum of the test beam (5).

8. Method according to claim 7,
**characterized in**
**that** the pump beam (A,B) in the second of the both optical fibers (4) is shifted in the frequency away across the spectrum of the test beam (5).

9. Method according to claim 1,
**characterized in**
**that** the phase difference of the both frequency bands is determined in relation to a minimum or maximum of the amplitude signal.

10. Method according to claim 1,
**characterized in**
**that** the test beam (5) lies in the frequency range of the visible light or close to the visible light.

11. Method according to claim 1,
**characterized in**
**that** the intensity of the pump beam (A,B) is dimensioned in a way, so that it creates in absence of the test beam (5) linear effects within the optical fibers (3,4) at the most in an imperceptible dimension, in particular a stimulated Brillouin scattering ("SBS").

12. Method according to one of the preceding claims,
**characterized in**
**that** a part of the second amplified frequency band is coupled out by a coupler (17) and is recorded by means of a further detector (18), so that besides the phase spectrum also the amplitude spectrum can be measured simultaneously.

13. System for the implementation of the method according to one of the preceding claims,
**characterized in**
two test branches, each comprising an optical fiber (3,4), in each of which a test beam (5) of the same source is spreading in a forward direction,
coupling means (2) for coupling pump beam (A,B) into each of the test branches contrary to the test beam (5) spreading therein,
a frequency shifter (7) for manipulating the frequency of the pump beam (B) spreading in a test branch (4),
a frequency shifter (23) for manipulating the frequency of one of the coupled out frequency portions,
respective coupling means (9,10) for coupling out each of the beams, spreading in a forward direction in each of the test branches,
a unifying mean (14) to overlay both coupled out beams, and
a detector (11) for measuring the intensity of the overlay beam, and
a computer, programmed for the implementation of the method according to one of the preceding claims.

14. System according to claim 13,
**characterized in**
a phase actuating element (15) for manipulating the phasing of the beam, spreading in a test branch.

15. System according to claim 14,
**characterized in**
a pump source, in particular a variable laser source (1), for generating the pump beam to be coupled into both of the test branches (3,4).

16. System according to claim 13,
**characterized in**
a computer (16) for automatically controlling of the frequency shifter (7,23) and the phase actuating element (15), and for reading-out the detector signal.

## Revendications

1. Procédé de détermination de la différence de phase entre deux bandes de fréquences dans le spectre de fréquences d'un rayonnement d'échantillonnage électromagnétique (5) présentant les étapes suivantes :
- le rayonnement d'échantillonnage (5) est injecté dans au moins un guide de lumière (3, 4) dans lequel ou dans lesquels il se propage dans la direction de propagation,
- dans le ou les guides de lumière (3,4) un rayonnement de pompage (A, B) d'une fréquence connue est respectivement injecté dans le sens contraire de la direction de propagation du rayonnement d'échantillonnage (5),
- la fréquence de ce premier rayonnement de pompage (A) est sélectionnée de sorte qu'une première bande de fréquences étroite du rayonnement d'échantillonnage (5) soit amplifiée par une diffusion Brillouin stimulée (gain DBS),
- la fréquence de l'autre second rayonnement de pompage (B) est sélectionnée de sorte qu'une seconde bande de fréquences étroite du rayonnement d'échantillonnage (5) soit amplifiée par DBS,
- la fréquence de la première bande de fréquence est modifiée par une modulation d'amplitude de sorte qu'elle coïncide avec la fréquence de la seconde bande de fréquences,
- les deux bandes de fréquences amplifiées sont réunies dans un faisceau commun, l'amplitude de la superposition obtenue étant enregistrée dans un détecteur (11) et la relation de phase relative entre les bandes de fréquences étant ainsi déterminée.

2. Procédé selon la revendication 1,
**caractérisé en ce que**
le rayonnement d'échantillonnage (5) est injecté dans deux guides de lumière (3, 4).

3. Procédé selon la revendication 1 ou 2,
**caractérisé en ce que**
qu'à partir du signal de sortie du détecteur (11), notamment du convertisseur optique-électrique, l'information de phase est directement déterminée.

4. Procédé selon la revendication 3,
**caractérisé en ce que**
l'information de phase est déterminée clairement à l'aide d'un décalage de phase entre deux copies du spectre du rayonnement d'échantillonnage.

5. Procédé selon la revendication 1,
**caractérisé en ce que**
l'une des deux bandes de fréquences est déphasée à l'aide d'un déphaseur (15) par l'enregistrement du signal d'amplitude, la différence de phase des deux bandes de fréquences étant déterminée par la modification du signal d'amplitude.

6. Procédé selon l'une des revendications précédents,
**caractérisé en ce que**
le rayonnement de pompage (A, B) à injecter dans le ou les guides de lumière (3, 4) est généré par une source de pompage commune, notamment par un laser (1), le rayonnement de pompage (A, B) étant réparti par un séparateur de faisceau (2) sur les deux guides de lumière (3, 4), le pic de gain créé dans le premier guide de lumière (3) servant de référence.

7. Procédé selon l'une des revendications précédentes,
**caractérisé en ce que**
la fréquence du rayonnement de pompage respectif (A, B) est réglée de sorte que le stoke peak du DBS se trouve dans le spectre de fréquence du rayonnement d'échantillonnage (5).

8. Procédé selon la revendication 7,
**caractérisé en ce que**
le rayonnement de pompage (A, B) dans le second des deux guides de lumière (4) est décalé dans la fréquence au-delà du spectre du rayonnement d'échantillonnage (5).

9. Procédé selon la revendication 1,
**caractérisé en ce que**
la différence de phase des deux bandes de fréquences est déterminée du point de vue du minimum ou du maximum du signal d'amplitude.

10. Procédé selon la revendication 1,
**caractérisé en ce que**
le rayonnement d'échantillonnage (5) se trouve dans la plage de fréquence de la lumière visible ou proche de la lumière visible.

11. Procédé selon la revendication 1,
**caractérisé en ce que**
l'intensité du rayonnement de pompage (A, B) est mesurée de sorte à générer, en l'absence du rayonnement d'échantillonnage (5) à l'intérieur des guides d'ondes (3, 4), des effets non linéaires de manière imperceptible tout au plus, comme notamment une diffusion stimulée Brillouin ('SBS').

12. Procédé selon l'une des revendications précédentes,
**caractérisé en ce que**
une partie de la seconde bande de fréquences amplifiée est désaccouplée via un couplage (17) et est enregistrée par un autre détecteur (18) si bien que le spectre d'amplitude peut être mesuré en même temps que le spectre de phase.

13. Système de mise en pratique du procédé selon l'une des revendications précédentes,
**caractérisé par**
deux branches d'échantillonnage comprenant respectivement un guide d'ondes (3, 4) dans lesquelles le rayonnement d'échantillonnage (5) de la même source se propage en direction avant,
des moyens de couplage (2) pour l'injection du rayonnement de pompage (A, B) dans chacune des branches d'échantillonnage dans le sens contraire du rayonnement d'échantillonnage (5) qui s'y propage,
un variateur de fréquence (7) pour influencer la fréquence du rayonnement de pompage (B) qui se propage dans une branche d'échantillonnage (4),
un variateur de fréquence (23) pour influencer la fréquence de l'une des parts de fréquence découplées,
des moyens de couplage (9, 10) respectifs pour découpler le rayonnement se propageant en direction avant dans chaque branche d'échantillonnage,
un moyen d'unification (14) pour superposer les deux rayonnements découplés et
un détecteur (11) pour mesurer l'intensité du rayonnement superposé et
un ordinateur programmé pour la réalisation du procédé selon l'une des revendications précédentes.

14. Système selon la revendication 13,
**caractérisé par**
un modulateur de phase (15) pour influencer la relation de phase du rayonnement se propageant dans une branche d'échantillonnage

15. Système selon la revendication 14,
**caractérisé par**
une source de pompage, notamment une source de laser réglable (1) pour créer le rayonnement de pompage à injecter dans les deux branches d'échantillonnage (3, 4).

16. Système selon la revendication 13,
**caractérisé par**
un ordinateur (16) pour la commande automatique du variateur de fréquence (7, 23) et du modulateur de phase (15) ainsi que pour lire le signal du détecteur.
